# EUROPEAN PATENT APPLICATION

(11) **EP 1 523 164 A1**
(43) Date of publication of application: **13.04.2005**
(21) Application number: 04726015.3
(22) Date of filing: 06.04.2004
(51) Int. Cl.: H04M 1/73, G06F 1/32, G06F 3/023, G06F 3/033

(54) **ELECTRONIC DEVICE**

(30) Priority: 15.04.2003 JP 2003110715
(71) Applicant: Sony Ericsson Mobile Communications Japan, Inc., Minato-ku, Tokyo 108-0075 (JP)
(72) Inventor: OKAMOTO, Ichiro, c/o Sony Ericsson Mobile, Minato-ku, Toky o 108-0075 (JP)
(74) Representative: Turner, James Arthur
(86) International application number: PCT/JP2004/004955
(87) International publication number: WO 2004/093419

(57) **Abstract**

The object of the present invention is to provide an electronic device capable of reducing consumption of power supplied to active elements used for a rotary operation unit in a stand-by time.

The electronic device according to the present invention includes the rotary operation unit that is freely rotatable, active elements 31 and 32 for detecting rotation of the rotary operation unit, and control means 43 for controlling the power supply to the active elements 31 and 32 depending on a state of the device.

## Description

### TECHNICAL FIELD

The present invention relates to an electronic device suitable to be applied to a mobile telephone unit, PDA (personal digital assistant) or the like including rotary operation means.

### BACKGROUND ART

Conventionally, what is called a jog dial has been developed as rotary operation means which can be incorporated in an electronic device such as a mobile phone unit. A mechanism of detecting rotation of the jog dial includes a rotary disc and a fixed disc laminated almost in parallel therewith to form a rotary encoder. Further, for example, a set of opposed electrodes arranged on the rotary disc are slidably contacted with several sets of opposed electrodes arranged on the fixed disc, each of the electrodes being slightly shifted in a circumferential direction, and when the rotary disc is rotated, pulse signals having a phase difference depending on the direction of rotation are obtained to detect the rotation (refer to, for example, Patent Reference 1: Japanese Published Patent Application No. H8-79360).

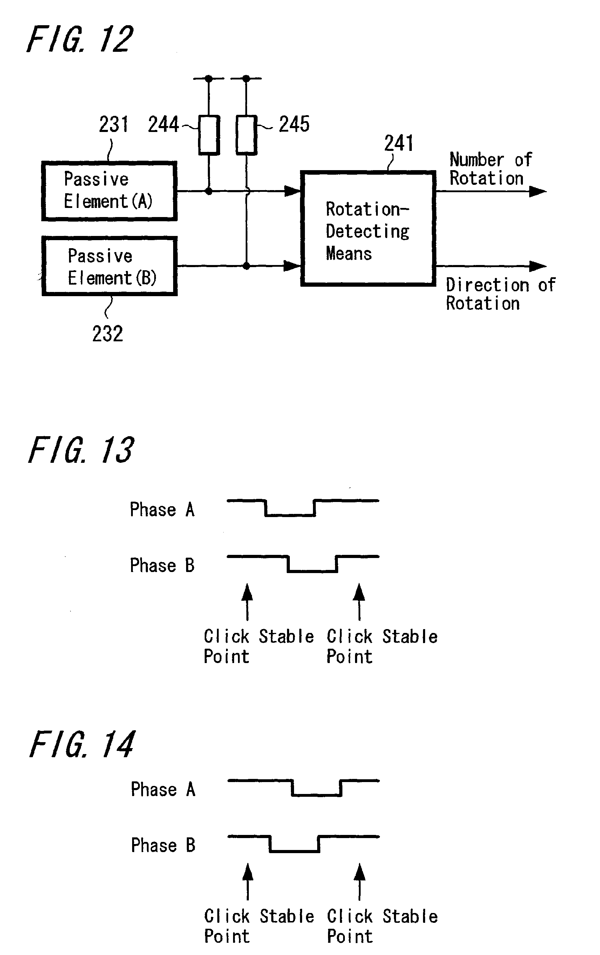

FIG. 12 shows a schematic circuit configuration as disclosed in Patent Reference 1 when so called passive elements such as opposed electrodes are used to detect the rotation of jog dial. In this example, the mechanism has a click stable point where a position of the rotary disc is determined at a fixed angle of rotation. A passive element (A) 231 represents one of an electrode pair of the opposed electrodes, to which power is supplied through a resistor 244 functioning as a pull-up resistance. A passive element (B) 232 represents the other electrode pair of the opposed electrodes, to which power is supplied through a resistor 245 functioning as a pull-up resistance. The passive element (A) 231 and passive element (B) 232 supply the pulse signals to a rotation-detecting means 241 according to the rotation of jog dial. The rotation-detecting means 241 receives the pulse signals to supply information on the number of rotation and information on the direction of rotation to a control means not shown, whereby various controls take place.

FIGS. 13 and 14 show examples of the pulse signals generated by the passive element (A) 231 and passive element (B) 232 when the jog dial is operated. FIG. 13 shows an example when the jog dial is rotated clockwise, and for example such waveforms are detected at that time, that is, a waveform of phase A generated by the passive element (A) falls first and then a waveform of phase B generated by the passive element (B) falls. FIG. 14 shows an example when the jog dial is rotated counterclockwise, and for example such waveforms are detected at that time, that is, a waveform of phase B generated by the passive element (B) falls first and then a waveform of phase A generated by the passive element (A) falls.

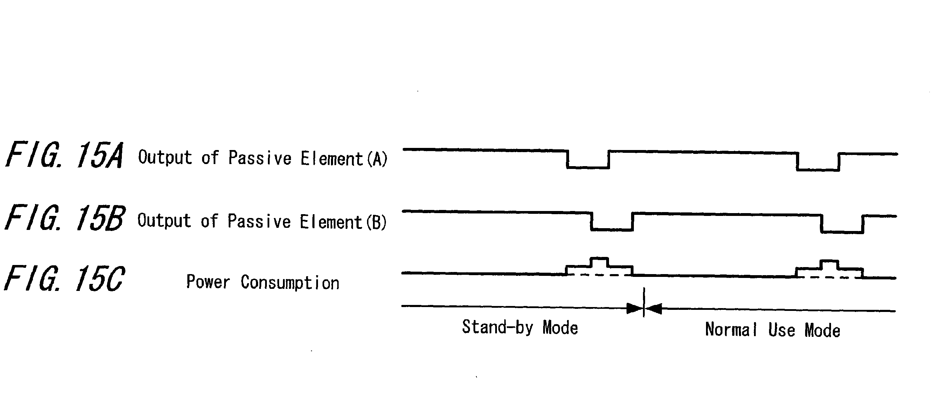

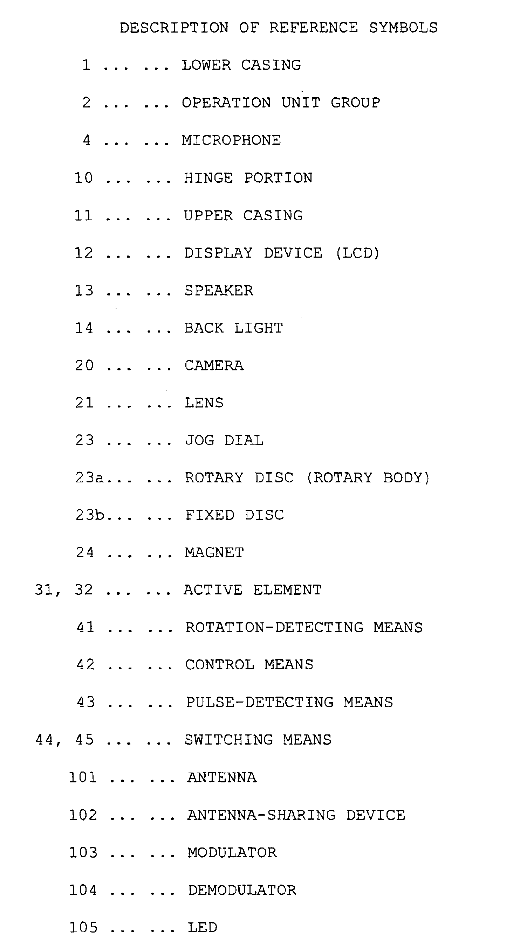

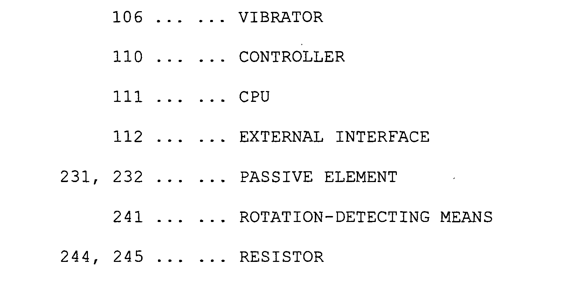

FIG. 15 shows a relation between the transition of a state and power consumption at the time of a conventional normal use mode and a stand-by mode. The normal use mode is a state in which a back light of LCD (Liquid Crystal Display) turns on and a cursor or the like on a menu display moves according to the rotation of jog dial. For example, as soon as a power supply of the mobile phone unit is switched on, the normal use mode is on. The stand-by mode is a state in which, when no operation is made for a while as it is in the normal use mode, the back light of LCD turns off to save the consumption of battery.

When passive elements are employed in the jog dial, because the waveforms of the phase A and phase B are both on a high level at a click stable point where opposed electrodes of the rotary disc and the fixed disc are slidably contacted, no current flows through the pull-up resistances 244 and 245, and so there is almost no need to take power consumption in the stand-by mode into consideration. For this reason, although it is designed to observe the two pulses continuously even in the stand-by mode and the state is sifted to normal use mode on detecting rotation of the rotary disc, it is unnecessary to particularly differentiate the detecting operation of jog dial between the stand-by mode and the normal use mode.

However, because the passive elements of a contact type in which electrodes are slidably contacted have a problem of chattering, endurance and the like, there is proposed one using an active element of a non-contact type such as a Hall element to detect the rotation of jog dial (refer to, for example, Patent Reference 2: Japanese Published Patent Application No. H11-331960). What is disclosed in Patent reference 2 is such that, in an information input device including a rotary operation unit (jog dial) having a rotation-detecting function and depression-detecting function, when the rotary operation unit is not operated over a predetermined period of time, a control-signal-sending circuit stops and enters a non-operating state. Moreover, when it is detected in the non-operating state that the rotary operation unit is rotated or depressed, the control-signal-sending circuit is made to operate and power is supplied only when necessary to prevent a battery from being wasted.

However, in case of a jog dial using an active element, because rotation of the jog dial is detected by supplying power to the element, power is supplied to each active element even in the stand-by mode in which the jog dial is not operated, which causes a disadvantage of wasting power.

In view of the above, the present invention provides an electronic device capable of reducing consumption of power supplied to the active element used in the rotary operation unit during the stand-by time.

### DISCLOSURE OF THE INVENTION

An electronic device according to the present invention includes a rotary operation unit that is freely rotatable, an active element for detecting rotation of the rotary operation unit, and control means for controlling power supplied to the active element according to a state of the device.

According to the present invention, because the power supplied to the active element can be controlled according to a state of the device, useless power consumption can be reduced.

Further, an electronic device according to the present invention is formed of a casing which can be folded and includes a rotary operation unit that is freely rotatable, an active element for detecting rotation of the rotary operation unit, and control means that stops supplying power to the active element when the casing is folded and starts supplying power to the active element when the casing is opened.

According to the present invention, because the power supplied to the active element can be controlled in response to opening and closing of a casing of the device, useless power consumption can be reduced.

### BRIEF DESCRIPTION OF DRAWINGS

FIG. 1 is a perspective view showing an outer appearance of a folding-type mobile phone unit in a fully opened state according to an embodiment of the present invention;
FIG. 2 is a perspective view showing an outer appearance of the folding-type mobile phone unit of FIG. 1 in a half opened state;
FIG. 3 is a block diagram showing an example of a circuit configuration of the mobile phone unit according to an embodiment of the present invention;
FIG. 4 is a diagram provided for explaining the rotary operation unit and active element according to an embodiment of the present invention;
FIG. 5 shows an example of pulse waveforms generated by the active elements as a result of rotary operation according to an embodiment of the present invention;
FIG. 6 shows an example of pulse waveforms generated by the active elements as a result of rotary operation according to an embodiment of the present invention;
FIG. 7 is a block diagram showing a circuit configuration using the active elements according to an embodiment of the present invention;
FIG. 8 is a diagram showing the relation between transition of a state and power consumption in each mode according to an embodiment of the present invention;
FIG. 9 is a diagram showing transition of a state of the folding-type mobile phone unit according to an embodiment of the present invention;
FIG. 10 shows a circuit configuration using the active elements according to another embodiment of the present invention;
FIG. 11 is diagram showing transition of a state of the electronic device according to still another embodiment of the present invention;
FIG. 12 is a block diagram showing a circuit configuration using a conventional passive element;
FIG. 13 shows an example of pulse waveforms generated by the passive elements as a result of rotary operation;
FIG. 14 shows an example of pulse waveforms generated by the passive elements as a result of rotary operation; and
FIG. 15 is a diagram showing the relation between transition of a state and power consumption in each mode according to prior art.

### BEST MODE FOR CARRYING OUT THE INVENTION

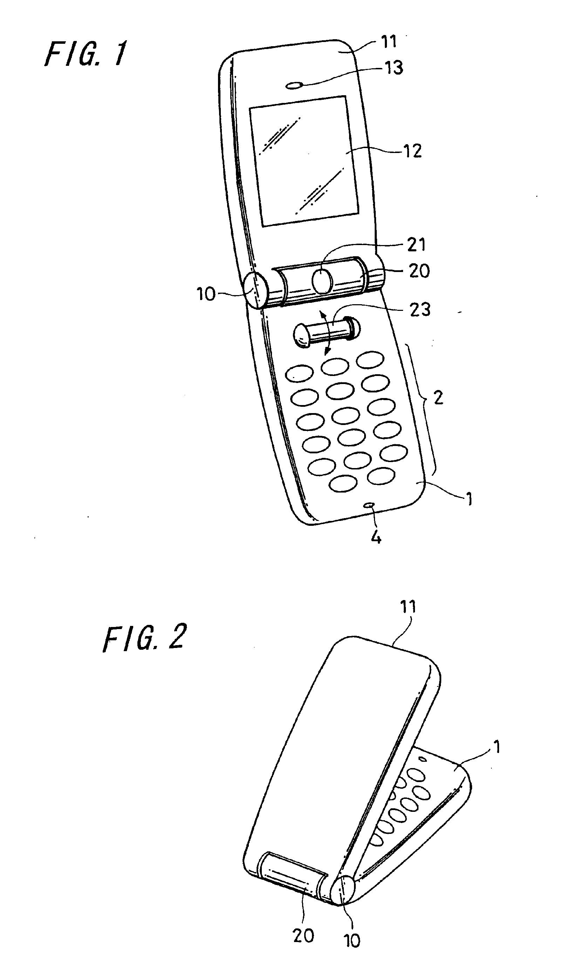

Hereinafter, an embodiment of the electronic device according to the present invention when applied to a mobile phone unit will be described with reference to FIGS. 1 through 9. In this embodiment, the invention is applied to what is called a folding-type mobile phone unit whose casing can be folded. FIG. 1 shows a perspective view showing an outer appearance of the folding-type mobile phone unit according to this embodiment when a lower casing and an upper casing are in a fully opened state.

In FIG. 1, a numeral 1 denotes a lower casing and a numeral 11 denotes an upper casing; the lower casing 1 is joined with the upper casing 11 through a hinge portion 10 to be freely opened and closed; inside the lower casing 1 (on the surface opposing the upper casing 11 in a closed state) are provided a group of operating buttons 2 including a power-supply button, a key-lock button or the like, what is called a jog dial 23 having both a rotation-detecting function and an orthogonal-push-detecting function, and a microphone 4. Note that the jog dial needs to have only the rotation-detecting mechanism and may be provided on a side portion of the lower casing 1 to be operated and pushed in an orthogonal direction to an axis of rotation, for example.

Inside the upper casing 11 are provided a display device 12 made of, for example, LCD (Liquid Crystal Display) and a speaker 13 which are used in the opened state of the folding-type mobile phone unit. Further, in the middle of the hinge portion 10 is provided a camera 20 which houses an image pickup device of a CCD (Charge-Coupled Device) type, a CMOS (Complementary Metal-Oxide Semiconductor) type or the like and can turn independently of the opening/closing operation of the lower casing 1 and upper casing 11. A numeral 21 denotes a lens of the camera 20.

FIG. 2 shows a perspective view showing an outer appearance of the folding-type mobile phone unit shown in FIG. 1, whose lower casing and upper casing are in a half opened state. Though not shown in the drawing, an antenna for transmitting and receiving a radio signal is provided.

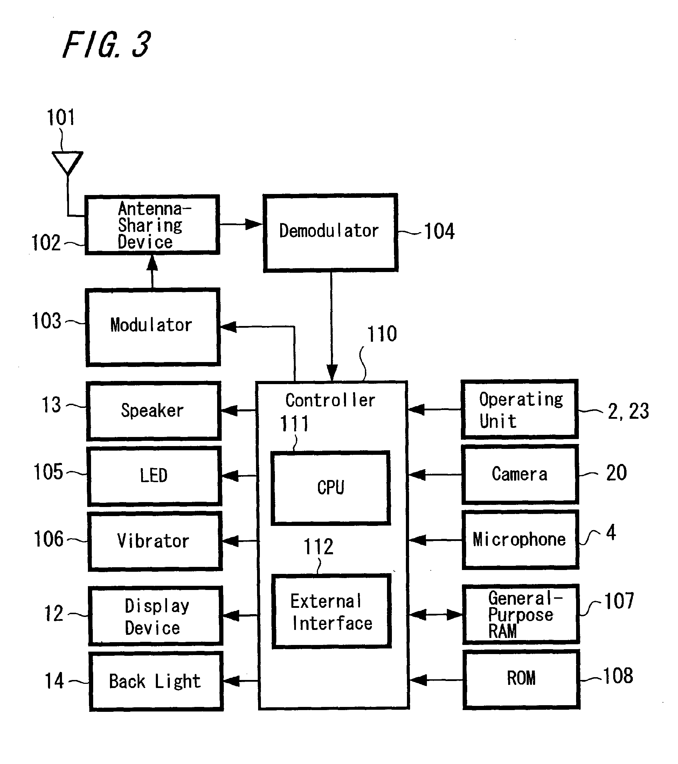

FIG. 3 is a block diagram showing an example of a circuit configuration of the folding-type mobile phone unit in this embodiment.

A reference numeral 110 denotes a controller for controlling the whole system. A numeral 107 denotes a general-purpose RAM (Random Access Memory) for storing various information sets and for providing a work area which is required for the controller 110 to perform control, and a numeral 108 denotes a ROM (Read Only Memory) storing various control programs and the like. The controller 110 includes a CPU (Central Processing Unit) 111 for operation and control, which is connected to an external interface 112 for connecting to RAM 107, ROM 108 and various peripheral devices through a system bus not shown. In other words, when the operating unit 2 or the jog dial 23 is operated, an output by the operation is supplied to the CPU 111 through the external interface 112 and system bus, and the CPU 111 performs predetermined processing in accordance with a program of ROM 108.

A reference numeral 101 denotes an antenna which transmits and receives a radio signal and is connected to an antenna-sharing device 102 using one antenna in common for transmission and reception. A transmission signal from the controller 110 is transmitted from the antenna 101 through a modulator 103 and the antenna-sharing device 102; and a signal received from the antenna 101 is supplied to the controller 110 through the antenna-sharing device 102 and a demodulator 104.

When the demodulator 104 receives a telephone call or an electronic mail from a base station through the antenna 101, the received signal is supplied to the controller 110; and the controller 110 notifies the user of the reception of telephone call or electronic mail by a voice from the speaker 13, or notifies the user by blinking of a LED 105 provided on the rear surface of the operating-button group 2, or notifies by a physically sensed feeling of vibration through a vibrator 106. On this occasion, the controller 110 further displays on a screen of the display device 12 a telephone number of the source side or an address of the sender of electronic mail through a display controller not shown.

When the user answers the telephone in response to the call, a voice signal of the party on the other end is received by the demodulator 104 through the antenna 101 and is supplied to the speaker 13 through the controller 110. A voice signal of the user from the microphone 4 is supplied from the controller 110 to the antenna 101 through the modulator 103 and is transmitted to the base station. In this way, a telephone conversation with the party on the other end takes place. In addition, when the received electronic mail is opened, contents of the mail are displayed on the screen of the display device 12.

The camera 20 captures an image of a subject through the lens 21 at a desired angle. The captured image is displayed on the display device 12 through the controller 110. Further, the displayed image can be stored in an internal non-volatile memory, a removable recording medium not shown or the like as a desired still image or moving image by pushing a shutter button provided in the operating button group 2 and the like.

A back light 14 turns on or off under the control of the CPU 111 depending on operating conditions of the operating unit 2, 23 and open/closed conditions of the casing of the device.

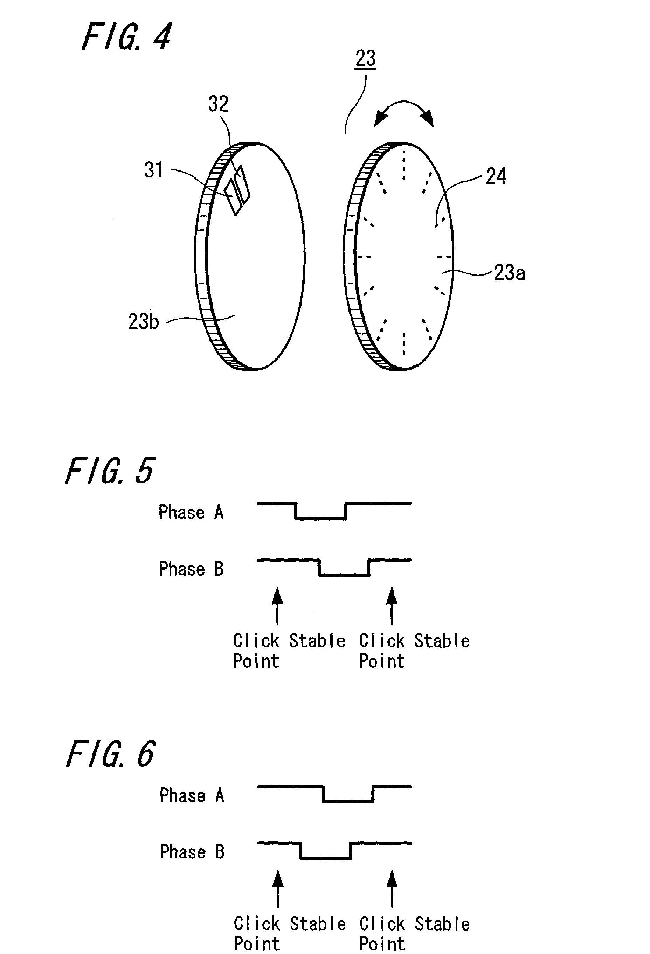

FIG. 4 is a schematic diagram for explaining a rotation-detecting mechanism of the jog dial in this embodiment. The push-detecting mechanism is not described in this example. A symbol 23a represents a rotary disc (rotary body) which rotates in response to user's operation to rotate. Broken lines 24 represent magnetic positions (or magnets) arranged on the rear surface of the rotary disc 23a at positions where a round is divided into, for example, twelve equal portions. A symbol 23b denotes a fixed disc of the casing of the electronic device and the like. Numerals 31 and 32 denote active elements made of Hall element or the like for detecting rotation of the rotary disc. In this example, hereunder the numeral 31 is assumed to denote a Hall element (A) and the numeral 32 is assumed to denote a Hall element (B). In addition, for non-contact type active element, a combination of LED (Light Emitting Diode) with a photo detector, or the like is conceivable.

The rotation-detecting mechanism of jog dial 23 in this embodiment constitutes a rotary encoder formed of the rotary disc 23a and the fixed disc 23b laminated therewith. Further, positions of the active element (A) 31 and active element (B) 32 on the fixed disc are arranged with a shift in the circumferential direction. In such a structure, when the rotary disc 23a is rotated, the magnets arranged on the back of the rotary disc rotate. Then, depending on the direction of rotation, each active element generates a pulse signal having a phase difference as shown in FIG. 5 or in FIG. 6, for example. When monitoring a detected phase difference and a detected order of the pulse signals generated by the active elements 31 and 32 at that time, it is possible to obtain information on the number of rotation and the direction of rotation and the information is supplied to the controller 110 of the mobile phone unit, so that the predetermined control such as moving a cursor or the like displayed on the screen in response to the operation can be made.

FIGS. 5 and 6 show examples of pulse signals generated in each active element when the jog dial 23 in this embodiment is operated to rotate. In this example, a system in which the active element (A) is connected is termed a phase A and a system in which the active element (B) is connected is termed a phase B.

FIG. 5 shows an example of waveforms when the jog dial 23 is rotated clockwise. The active element (A) and active element (B) generate pulses having a phase difference depending on the direction of rotation. This drawing shows a state in which, because the active element (A) first comes close to an arbitrary magnet in the rotary disc 23a, a waveform of the phase A falls first and then a waveform of the phase B falls. FIG. 6 shows an example of waveforms when the jog dial 23 is rotated counterclockwise. Because the active element (B) first comes close to an arbitrary magnet in the rotary disc 23a, a waveform of the phase B falls first and then a waveform of the phase A falls.

In those drawings, an arrow mark denotes a click stable point of the jog dial 23, which is a middle position between a click point and the next click point in the jog dial 23 and is provided to settle the position of the jog dial 23 stably by means of magnetic action not to be freely rotatable when no operation is made. In this example, the active element (A) 31 and active element (B) 32 are configured such that when the jog dial 23 is located in the click stable point, the active element (A) 31 and active element (B) 32 are both in a high level state; and when the jog dial is located on the click point, waveforms of the phase A and phase B are both in a low level state.

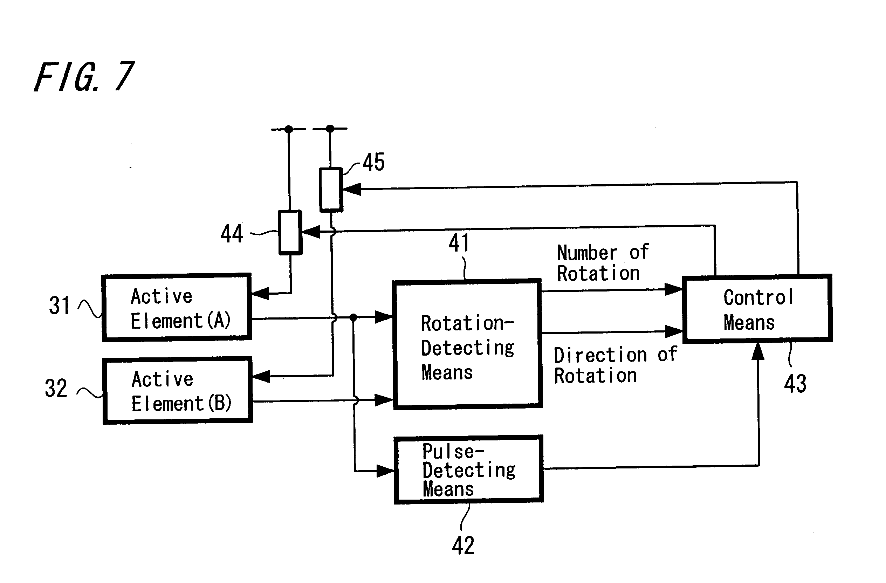

FIG. 7 shows an example of the circuit structure using the active element of this embodiment. In the drawing, numerals 44 and 45 denote on/off means (hereinafter termed a switch) for switching on and off power supplied to the active element (A) 31 and active element (B) 32 by a command from control means described later on, respectively; and a numeral 41 denotes rotation-detecting means for detecting rotation of the rotary disc 23a by receiving pulse signals generated by the active element (A) 31 and active element (B) 32 and for supplying information on the number of rotation and the direction of rotation of jog dial 23 to the control means. A numeral 42 denotes pulse-detecting means for detecting pulse signals from the active elements and for supplying an interrupt signal (hereinafter termed also wake-interrupt signal) to the control means. A numeral 43 denotes control means to obtain the information on the number of rotation and the direction on rotation from the rotation-detecting means 41 to move a cursor or the like displayed on the screen of the display device 12 in response to user's desired operation, and to receive the interrupt signal supplied from the pulse-detecting means 42 to control the on/off operation of the switches 45 and 44. In addition, the control means 43 may be the controller 110 in FIG. 3.

When the combination of LED with a photo-detector is employed as the active element, such on/off means is conceived that in stead of controlling the power supply, for example, intercepts and transmits light incident on the photo-detector from LED using a pinhole to control pulse signals from the active element.

The circuit thereof is connected to supply power to the active element (A) 31 and active element (B) 32 through the switches 45 and 44, and the pulse signals generated in response to the rotary operation of the jog dial 23 is supplied from the active element (A) 31 and active element (B) 32 to the rotation-detecting means 41. Then, information on the number of rotation and the direction of rotation is supplied from the rotation-detecting means 41 to the control means 43 using the pulse signals.

Moreover, in this circuit a pulse signal from one of the active elements, for example, the active element (A) is supplied to the pulse-detecting means 42. The pulse-detecting means 42 further supplies an interrupt signal to the control means 43. The control means 43 controls the on/off operation of the switches 44 and 45 by the interrupt signal to control power supplied to each active element. In addition, the control means 43 is, though not shown in the figure, capable of estimating open/closed conditions of a casing of the device, a key-lock setting, or the like to control the on/off operation of the switches 45 and 44.

In the configuration as described above, when the jog dial 23 is operated to rotate while power is supplied to the active element (A) 31 and active element (B) 32 through switches 44 and 45, the active element (A) 31 and active element (B) 32 generate pulse signals in response to the rotation. The generated pulse signals are supplied to the rotation-detecting means 41. The information on the number of rotation and the direction of rotation is supplied from the rotation-detecting means 41 to the control means 43. The control means 43 moves a cursor or the like displayed on the screen of the display device 12.

Furthermore, when the jog dial 23 is operated to rotate while power is supplied only to, for example, the active element (A) 31 by making the switch 44 on, the pulse-detecting means 42 receives a pulse signal from the active element (A) 31; transmits an interrupt signal to the control means 43 to make the switch 45 on; and supplies power also to the active element (B) 32 to operate the jog dial 23.

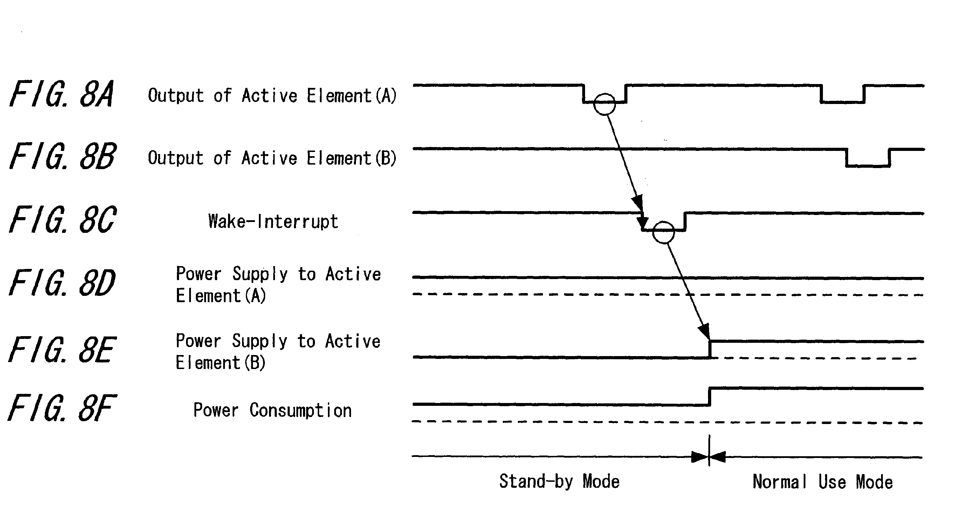

FIG. 8 shows a relation between the transitions of a state between a stand-by mode and a normal use mode, and power consumption. In the stand-by mode, power is supplied, for example, only to the active element (A) by making the switch 44 on, and when the jog dial 23 is rotated, only the active element (A) generates a pulse signal (a round mark portion in FIG. 8A). At this moment, no power is supplied to the active element (B), so that no pulse signal is generated (FIG. 8B). The pulse-detecting means 42 receives the pulse signal from the active element (A) and generates the interrupt signal (a round mark portion in FIG. 8C) to transmit the signal to the control means 43. Power is then supplied also to the active element (B) (FIG. 8E) to shift to the normal use mode in which the jog dial 23 can be operated to rotate freely.

During this time, power is always supplied to the active element (A) (FIG. 8D). Therefore, total power consumption of the whole active elements becomes the sum of power consumption of active element (A) and that of active element (B) as shown in FIG. 8F, thus enabling power consumption in the stand-by mode to be reduced to a half of that in the normal use mode.

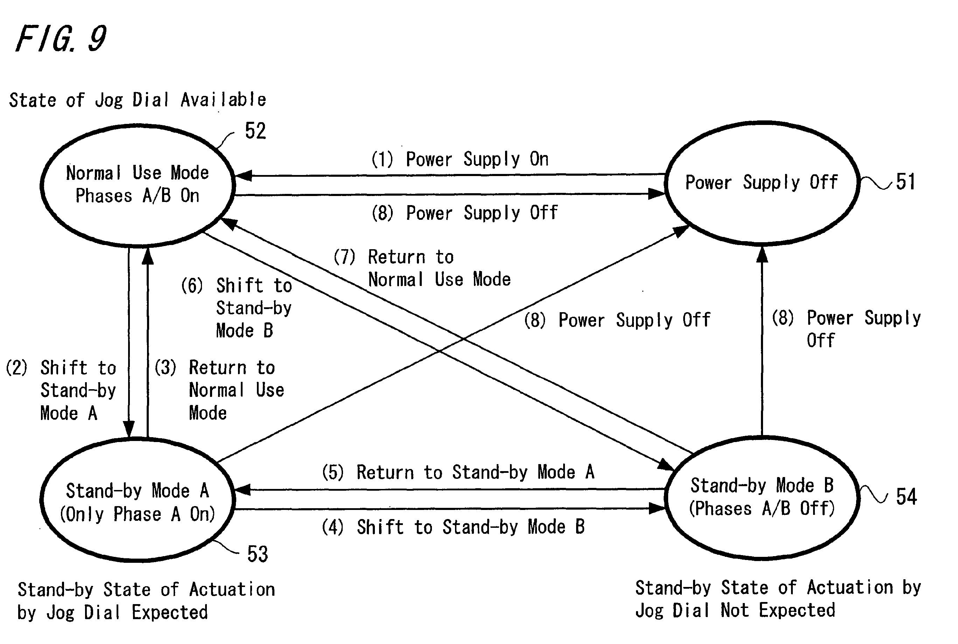

FIG. 9 is a diagram showing transitions of a state, in which power supply to the active element in various states of the folding-type mobile phone unit in this embodiment is explained. A numeral 51 denotes a state in which a power supply located in the upper stream of switching means 44 and 45 is turned off by pushing a power-supply button. A numeral 52 denotes the normal use mode in which the power supply to each of active elements 31 and 32 of the phases A and B is in an on-state and the jog dial 23 can be used freely. A numeral 53 denotes a state of a stand-by mode A in which power is supplied only to the active element (A) 31 of the phase A and the mobile phone unit is expected to be actuated by operating the jog dial. A numeral 54 denotes a state of a stand-by mode B in which no power is supplied to both of the active element (A) 31 of the phase A and active element (B) 32 of the phase B, and the mobile phone unit is not expected to be actuated by operating the jog dial. This state starts, for example, when the key-lock setting is operated or the casing of the mobile phone unit is closed.

First, in the power-supply-off state 51 of the mobile phone unit, when the power-supply button is pushed long, the power supply is turned on and also the switches 44 and 45 are turned on to supply power to the active element (A) 31 and active element (B) 32, thereby entering the normal use mode 52.

Subsequently, after a fixed time has passed from the state of the normal use mode 52, the liquid-crystal back light 14 is turned off and the switch 45 is made off to supply power only to the active element (A) 31 and shift the state to the stand-by mode A53. If a key, the jog dial or the like is then operated, the switch 45 is made on to return the state to the normal use mode 52.

When the mobile phone unit is folded or the key-lock setting is operated in the state of the stand-by mode A 53, both of the switches 44 and 45 are made off to stop power supply to the active element (A) 31 and active element (B) 32 to shift the state to the stand-by mode B54. At this moment, the key operation and jog dial operation are not allowed or are forbidden and the liquid-crystal back light 14 is turned off. If key-lock-release operation is made when the casing of the mobile phone unit is opened and the liquid-crystal back light 14 is turned off, the state is returned to the stand-by mode A53.

When the mobile phone unit is folded or the key-lock setting is operated in the normal use mode 52, both of the switches 44 and 45 are made off to stop power supply to the active element (A) 31 and active element (B) 32 to shift the state to the stand-by mode B54. At this moment, the key operation or jog-dial operation is not allowed or is forbidden. Further, when the key-lock setting is operated, the back light 14 is turned off after a fixed time has passed. When the key-lock is not set in the state of the stand-by mode B54, if the mobile phone unit is opened, the mobile phone unit returns to the normal use mode 52. Then, when with the mobile phone unit opened the liquid-crystal back light 14 is turned on and the key-lock is set, the state returns to the normal use mode 52 by performing the key-lock release operation.

Further, when the power-supply button is pushed long in each of the states of the normal use mode 52, stand-by mode A53, and stand-by mode B54, the mobile phone unit returns to the power-supply-off state 51.

As described above, in this embodiment power is only supplied to a part of active elements in the stand-by mode to reduce power consumption. Furthermore, in this embodiment power is only supplied to a required active element in accordance with a state of the stand-by mode to reduce useless power consumption.

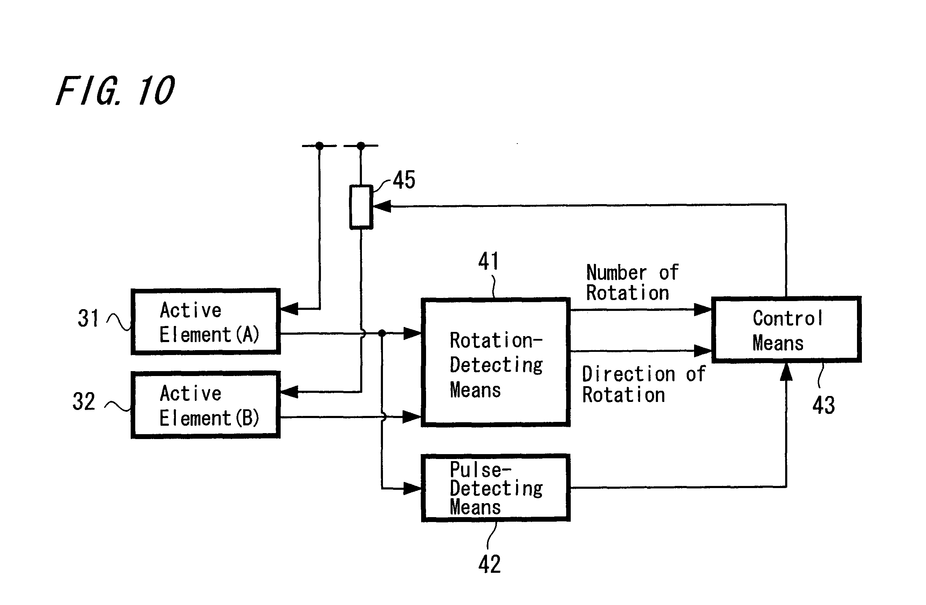

Another embodiment according to the present invention will be described with reference to FIG. 10. In FIG. 10, the switch 44 in FIG. 7 is not provided so that the active element (A) 31 may be connected directly to a power-supply line without the on/off means, that is, a switch. Therefore, power is always supplied to the active element (A) 31 unless a power supply for the mobile phone unit is turned off, so that the control means 43 only need to perform an on/off control of the switch 45. The other configuration is the same as that in FIG. 7 and the corresponding parts are denoted by the same numerals.

Similarly to the example in FIG. 7, also in FIG. 10 the same relation between the transitions of a state and power consumption in the state of normal use mode and stand-by mode as shown in FIG. 8 is obtained. In other words, power consumption in the stand-by mode can be reduced to a half of that in the normal use mode.

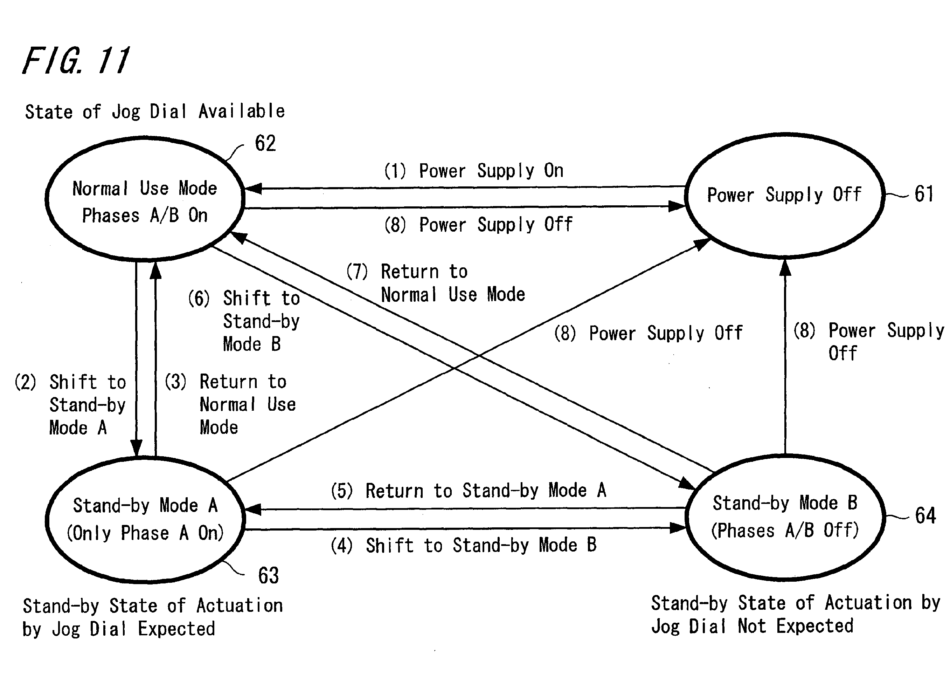

A still another embodiment according to the present invention will be described with reference to FIG. 11. FIG. 11 is a diagram showing transitions of a state, in which power is supplied in various states to the active elements of electronic devices such as a note-type PC (Personal Computer) and PDA.

FIG. 11 is a diagram showing transitions of a state, in which the circuit configuration using the active elements in FIG. 7 is applied to electronic devices such as the note-type PC and PDA instead of being applied to a folding-type mobile phone unit and power is supplied to active elements in various states thereof. The electronic device such as a note-type PC and PDA in this embodiment is provided with a display panel whose back light is turned off after a fixed time has passed without an operation.

A numeral 61 denotes a state in which a power-supply button is pushed and a power supply located in the upper stream of on/off means 44 and 45 is turned off. A numeral 62 denotes the normal use mode in which power is supplied to both of the active element 31 of the phase A and active element 32 of the phase B. In this mode, the jog dial 23 can be used freely. A numeral 63 denotes the stand-by mode A in which power is supplied only to the active element (A) 31, in which actuation by operating the jog dial is expected. A numeral 64 denotes the stand-by mode B in which no power is supplied to both of the active element (A) 31 of the phase A and the active element (B) 32 of the phase B. This is a state in which actuation by operating the jog dial is not expected. FOR example, when the key-lock setting is operated or the display is closed or in a stand-by mode for low power consumption, the device enters this state.

First, when the electronic device is in the power-supply-off state 61, if the power-supply button is pushed long, the power supply is turned on. The switches 44 and 45 are then made on to supply power to the active element (A) 31 and active element (B) 32, thereby entering the normal use mode 62.

Subsequently, after a fixed time has passed in the normal use mode 62, a screen saver not shown is actuated or the liquid-crystal back light 14 is turned off and the switch 45 is made off to supply power only to the active element (A) 31, so that the state shifts to the stand-by mode A63. In this mode, if the key, jog dial or the like is operated, the switch 45 is turned on to make the state return to the normal use mode 62.

When the display panel is closed or the key-lock setting is operated in the state of the stand-by mode A63, the switches 44 and 45 are both made off to make the state shift to the stand-by mode B64 in which power supply to the active element (A) 31 and to the active element (B) 32 is stopped. In this mode, operation of the key and operation of the jog dial are not allowed or are forbidden. Further, the liquid crystal back light 14 is turned off. When a fixed time has passed in the state of stand-by mode A, the state is shifted to a standby mode. When the state is not in the standby mode, if the display panel is opened and the key-lock-release operation is made, the state will return to stand-by mode A63.

When the display panel is closed or the key-lock-setting operation or shift-to-standby-mode operation with a specific key/mouse is operated, the switches 44 and 45 are both made off to shift to the stand-by mode B64 in which power supply to the active element (A) 31 and active element (B) 32 is stopped. In this mode, the key-operation and jog dial operation are not allowed or are forbidden.

In the state of the stand-by mode B64, by opening the display panel or pushing the power-supply button long if the key-lock is released, the standby mode can be released. Alternatively, when the display panel is opened and the state is not in the standby mode, the state returns to normal use mode 62 with the key-lock-release operation.

Then, if the power-supply button is pushed long in the normal use mode 62, stand-by mode A63, and stand-by mode B64, the state returns to the power-supply-off state 61.

As described above, according to this embodiment, because power is supplied only to a part of active elements in a stand-by mode, power consumption can be reduced. Furthermore, power is only supplied to the required active element in accordance with the state of stand-by mode, so that useless power consumption can be reduced.

Note that, the jog dial provided with a mechanism for detecting rotation in one direction has been described as an example of the embodiment of the present invention; however, in case of operating means termed a trackball capable of rotating in all directions, two pairs of active elements can be used instead of one pair thereof, and the power supply to the relevant active elements according to the present invention can be controlled.

Moreover, the present invention is not limited to the above-described embodiments and the other various structures can be employed without departing from the spirit of the present invention as a matter of course.

According to the present invention, because power supply to the active element can be controlled depending on the state of device, it is possible to reduce useless power consumption.

Moreover, according to the present invention, because the supply of power to the active element can be controlled depending on the open/closed state of the casing of device, it is possible to reduce useless power consumption.

## Claims

1. An electronic device, comprising:
a rotary operation unit that is freely rotatable,
an active element for detecting rotation of said rotary operation unit, and
control means for controlling power supply to said active element depending on a state of the device.

2. An electronic device according to claim 1, wherein
said active element includes a first and second active elements,
first and second switching means for switching on and off the power supplied to each of said first and second active elements are provided, and
said control means turns on said first and second switching means in an normal use time, and turns on said first switching means and turns off said second switching means in a first stand-by time.

3. An electronic device according to claim 2, wherein said control means further turns off said first and second switching means in a second stand-by time after key-operation is forbidden.

4. An electronic device according to claim 2, further comprising:
pulse-detecting means for detecting a pulse signal transmitted from the first active element in response to rotation of said rotary operation unit to generate an interrupt signal, wherein
said control means turns said second switching means on by the interrupt signal from said pulse-detecting means when said rotary operation unit is operated to rotate in said first stand-by time.

5. An electronic device according to claim 4, wherein
said control means turns said first switching means or both of said first and second switching means on, when said setting of forbidden key-operation is released in said second stand-by time.

6. An electronic device according to claim 1, wherein
said active element includes a first and second active elements,
power-supply-control means for turning on and off the power supplied to said second active element is further included, and
said control means turns on said power-supply-control means in an normal use time and turns off said power-supply-control means in a stand-by time.

7. An electronic device according to claim 6, further comprising:
pulse-detecting means for detecting a pulse signal transmitted from the first active element in response to rotary operation of said rotary operation unit to generate an interrupt signal, wherein
said control means turns on said switching means by the interrupt signal from said pulse-detecting means, when said rotary operation unit is operated to rotate in said stand-by time.

8. An electronic device according to claim 1, further comprising
a structure in which a first casing and a second casing are connected to be capable of being opened and closed and
the rotary operation unit that is freely rotatable, wherein
said control means stops supplying power to said active elements when said casings are closed and starts supplying power to said active element when said casings are opened.

## Amended claims

### Amended claims under Art. 19.1 PCT

1. (Amended) An electronic device, comprising:
a rotary operating unit that is freely rotatable,
an active element for detecting rotation of said rotary operating unit, and
control means for controlling power supply to said active element, wherein
the electronic device has three operation modes and
said control means controls the power supply to said active element depending on said modes.

2. (Amended) An electronic device according to claim 1,
wherein
said active element includes a first and second active elements and
said control means controls the power supply to one of said first and second active elements in at least one of said three modes.

3. (Amended) An electric device according to claim 2, further comprising:
first and second power-supply control means for switching on and off the power supplied to each of said first and second active elements, wherein
said control means makes said first and second power-supply control means on in a normal use mode, and makes said first power-supply control means on and said second power-supply control means off in a first stand-by mode.

4. (Amended) An electronic device according to claim 3,
wherein
said control means further makes said first and second power-supply control means off in a second stand-by mode where key operation setting is forbidden.

5. (Amended) An electronic device according to claim 3, further comprising:
pulse-detecting means for detecting a pulse signal transmitted from the first active element in response to rotation of said rotary operating unit to generate an interrupt signal, wherein
said control means makes said second power-supply control means on by the interrupt signal from said pulse-detecting means when said rotary operating unit is operated to rotate in said first stand-by mode.

6. (Amended) An electronic device according to claim 5,
wherein
said control means makes said first power-supply control means or both of the first and second power-supply control means on, when key operation forbidden setting is released in said second stand-by mode.

7. (Amended) An electronic device according to claim 2, further comprising:
power-supply control means for switching on and off the power supply to said second active element, wherein
said control means makes said power-supply control means on in a normal use mode and makes said power-supply control means off in a stand-by mode.

8. (Amended) An electronic device according to claim 7, further comprising:
pulse-detecting means for detecting a pulse signal transmitted from the first active element in response to rotary operation of said rotary operating unit to generate an interrupt signal, wherein
said control means makes said power-supply control means on by the interrupt signal from said pulse-detecting means, when said rotary operating unit is operated to rotate in said stand-by mode.

9. (Amended) An electronic device according to claim 3,
wherein
said electronic device has a structure in which a first casing and a second casing are connected to be capable of being opened and closed, and
said control means shifts to the second stand-by mode and makes said first and second power-supply control means off when said casings are closed, and shifts to the normal use mode and makes said first and second power-supply control means on when said casings are opened.

10. (Added) An electronic device according to claim 2, further comprising:
a third power-supply control means for switching on and off power supply to a backlight for lighting display means, wherein
said control means makes said first power-supply control means on and makes said second and third power-supply control means off, when shifted from said normal use mode to said first stand-by mode.

Statement under Art. 19.1 PCT
Amended claims 1 to 9 replaces claims at the time of application. Claim 10 is added.

Grounds for amending claims under Article 19 are that three modes and conditions thereof recited in claims 1 and 2 are described in FIG. 9 and explanation thereof. In amended claims 3 to 9, numbers of cited claims are corrected and expression of words is made appropriate with the change of claim 2 without any substantial addition of contents. An added claim 10 is based on the description at p.18,, lines 14-18, "Subsequently, after a fixed time has passed from the state of a normal use mode 52 --shift the state to the stand-by mode A 53".

A literature indicated in an international search report discloses "A portable communication terminal in which two separate casings are connected to be freely opened and closed, wherein a predetermined operating key is put into a key-lock state when the casings are closed, and the key-lock state of the predetermined operating key is released when the casings are opened". Further, a specific example of such key-lock state is disclosed such as stopping the detection of key operation and not operating the key even though pushed.

However, the above literature discloses only the control over key operation in two modes, but does not disclose that the three modes recited in the amended claim 1 can be controlled. Furthermore, there is neither disclosure nor suggestion on providing two active elements for detecting the key state and on controlling the operation of those elements as recited in amended claim 2. Inventions claimed in amended claims 1 and 2 have an advantageous result capable of making accurate control over the key operation depending on circumstances. In addition, according to an invention in added claim 10, a meritorious result capable of aiming at more effective saving of power is obtained.
